# EUROPEAN PATENT SPECIFICATION

(11) **EP 2 876 711 B1**
(45) Date of publication and mention of the grant of the patent: **27.06.2018**
(21) Application number: 14192598.2
(22) Date of filing: 11.11.2014
(51) Int. Cl.: H01M 4/36, H01M 4/62, H01M 4/66, H01M 4/13, H01M 10/0525, H01M 10/0585

(54) **ENERGY STORAGE DEVICE AND ENERGY STORAGE MODULE**
ENERGIESPEICHERVORRICHTUNG UND ENERGIESPEICHERMODUL
DISPOSITIF DE STOCKAGE D'ÉNERGIE ET MODULE DE STOCKAGE D'ÉNERGIE

(30) Priority: 25.11.2013 JP 2013242946
(43) Date of publication of application: 27.05.2015
(73) Proprietor: GS Yuasa International Ltd., Kisshoin, Minami-ku, Kyoto-shi, Kyoto 601-8520 (JP)
(72) Inventor: Yamafuku, Taro, Kyoto-shi, Kyoto 601-8520 (JP); Kawaguchi, Kazuki, Kyoto-shi, Kyoto 601-8520 (JP); Miyazaki, Akihiko, Kyoto-shi, Kyoto 601-8520 (JP); Sasaki, Takeshi, Kyoto-shi, Kyoto 601-8520 (JP)
(74) Representative: Isarpatent

(56) References cited:
- EP-A1- 2 592 674
- JP-A- 2008 103 310
- JP-A- 2009 170 183
- JP-A- 2013 045 659
- US-A1- 2013 017 441
- US-A1- 2013 309 566

## Description

### FIELD

The present invention relates to an energy storage device and an energy storage module.

### BACKGROUND

In recent years, as a power source for a vehicle such as an automobile and a motorcycle, a variety of equipment such as a portable terminal and a notebook personal computer, an energy storage device capable of discharging and charging, which includes a battery such as a lithium ion battery and a nickel metal hydride battery, and a capacitor such as an electric double layer capacitor, has been employed.

As such an energy storage device, an energy storage device provided with an electrode assembly for a lithium ion secondary battery in which the electrode assembly has a pair of sheet-like electrodes and a separator arranged between the pair of electrodes has hitherto been known.

In this type of energy storage device, each of the pair of electrodes of the electrode assembly has current collecting foil and an active material layer which is arranged at one face of the current collecting foil and contains an active material.

Moreover, in this type of energy storage device, in the electrode assembly, the electrodes are opposite to each other so that the respective active material layers are adjacent to each other via a separator.

In this type of energy storage device, the separator of the electrode assembly may shrink, and moreover, a foreign substance may intrude into a space between the electrodes of the electrode assembly. This can cause a minute short circuit between the electrodes in this type of energy storage device.

In contrast, in order to prevent a minute short circuit between the electrodes, an energy storage device which has an insulating layer on one electrode of an electrode assembly has been known (JP-A-2013-045659, JP-A-2008-103310, US 2013/0309566 A1).

However, in the above-mentioned energy storage device, it is desirable that insulation properties of the insulating layer be further enhanced.

### SUMMARY

An object of the present invention is to provide an energy storage device having an insulating layer excellent in insulation properties and an energy storage module.

An energy storage device according to an aspect of the present invention includes an electrode assembly having a pair of electrodes overlapped with each other. At least one of the electrodes includes a current collecting substrate, an active material layer arranged on the current collecting substrate, an intermediate layer arranged between the current collecting substrate and the active material layer, and an insulating layer arranged on the current collecting substrate and in contact with at least the intermediate layer. The active material layer contains an active material and a first binder. The intermediate layer contains a carbonaceous material and a second binder. The insulating layer contains an insulating material and a third binder. The second binder is a nonaqueous binder. The third binder is an aqueous binder.

### BRIEF DESCRIPTION OF THE DRAWINGS

Fig. 1 is a cross-sectional view schematically illustrating a cross section of an electrode assembly in accordance with one embodiment;
Fig. 2 is a cross-sectional view schematically illustrating a cross section of an electrode assembly in accordance with another embodiment;
Fig. 3 is a cross-sectional view schematically illustrating a cross section of an electrode assembly in accordance with another embodiment;
Fig. 4 is a cross-sectional view schematically illustrating a cross section of an electrode assembly in accordance with another embodiment;
Fig. 5 is a cross-sectional view schematically illustrating a cross section of an electrode assembly in accordance with another embodiment;
Fig. 6 is a cross-sectional view schematically illustrating a cross section of an electrode assembly in accordance with another embodiment;
Fig. 7 is a view schematically illustrating an outer appearance of an electrode assembly;
Fig. 8 is a schematic view schematically illustrating an outer appearance of a nonaqueous electrolyte secondary battery as an example of an energy storage device;
Fig. 9 is a schematic view schematically illustrating the inside of a case for a nonaqueous electrolyte secondary battery as an example of an energy storage device;
Fig. 10 is a cross-sectional view taken along the line III-III in Fig. 9;
Fig. 11 is a cross-sectional view schematically illustrating a cross section of a nonaqueous electrolyte secondary battery as an example of an energy storage device; and
Fig. 12 is a schematic view schematically illustrating an outer appearance of an example of an energy storage module.

### DESCRIPTION OF EMBODIMENT

An energy storage device according to an aspect of the present invention includes an electrode assembly having a pair of electrodes overlapped with each other. At least one of the electrodes includes a current collecting substrate, an active material layer arranged on the current collecting substrate, an intermediate layer arranged between the current collecting substrate and the active material layer, and an insulating layer arranged on the current collecting substrate and in contact with at least the intermediate layer. The active material layer contains an active material and a first binder. The intermediate layer contains a carbonaceous material and a second binder. The insulating layer contains an insulating material and a third binder. The second binder is a nonaqueous binder. The third binder is an aqueous binder.

In an aspect of the energy storage device according to the present invention, the first binder is a nonaqueous binder.

In another aspect of the energy storage device according to the present invention, the active material layer contains a carbonaceous material.

In another aspect of the energy storage device according to the present invention, the insulating material comprises inorganic particles.

In another aspect of the energy storage device according to the present invention, each of the pair of electrodes includes at least the active material layer and the active material layers are each arranged to face each other. The insulating layer of one electrode is arranged to face at least a part of the end edge of the active material layer in the other electrode.

In another aspect of the energy storage device according to the present invention, in one electrode, the insulating layer is arranged to cover the face of the active material layer which is opposed to the other electrode.

In another aspect of the energy storage device according to the present invention, in one electrode, the insulating layer is arranged to cover the face of the current collecting substrate which is opposed to the other electrode.

In another aspect of the energy storage device according to the present invention, the intermediate layer has an intermediate layer-protruding portion protruded outside from the end edge of the active material layer. The insulating layer is arranged to cover the intermediate layer-protruding portion while being in contact with the current collecting substrate.

In another aspect of the energy storage device according to the present invention, the pair of electrodes correspond to a positive electrode and a negative electrode, respectively. The positive electrode has a positive active material layer as the active material layer, the intermediate layer, and the insulating layer. The negative electrode has a negative active material layer as the active material layer. The negative active material layer has an end edge arranged outside from the end edge of the positive active material layer facing the negative active material layer. The intermediate layer has an intermediate layer-protruding portion protruded outside from the end edge of the positive active material layer. The insulating layer is arranged to face the end edge of the negative active material layer and is arranged to cover a surface of the intermediate layer-protruding portion which faces the negative electrode while covering the end edge of the positive active material layer.

In an aspect of an energy storage module according to the present invention, the module includes the above-described energy storage device and a bus bar member electrically connected to the energy storage device.

A method for producing an energy storage device according to an aspect of the present invention is a method for producing an energy storage device including an electrode assembly having a pair of electrodes overlapped with each other. The method includes an intermediate layer-forming step of applying a composition for an intermediate layer containing a carbonaceous material and a nonaqueous binder to a current collecting substrate of at least one of the electrodes. The method further includes an active material layer-forming step of applying a composite containing an active material and a nonaqueous binder on the intermediate layer. The method further includes an insulating layer-forming step of applying a composition for an insulating layer containing an insulating material and an aqueous binder on at least one of the intermediate layer, the active material layer and the current collecting substrate.

In an aspect of the method for producing an energy storage device according to the present invention, the active material layer-forming step and the insulating layer-forming step are simultaneously performed.

In another aspect of the method for producing an energy storage device according to the present invention, the composite contains a carbonaceous material.

In another aspect of the method for producing an energy storage device according to the present invention, the insulating material contains inorganic particles.

In another aspect of the method for producing an energy storage device according to the present invention, in the insulating layer-forming step, the composition for an insulating layer is applied on a portion of the intermediate layer on which the composite is not applied.

Hereinafter, one embodiment of the electrode assembly according to the aspect of the present invention will be described with reference to the drawings.

An energy storage device of the present embodiment includes an electrode assembly having a pair of electrodes overlapped with each other. At least one of the electrodes includes a current collecting substrate, an active material layer arranged on the current collecting substrate, an intermediate layer arranged between the current collecting substrate and the active material layer, and an insulating layer arranged on the current collecting substrate. The active material layer contains an active material and a first binder. The intermediate layer contains a carbonaceous material and a second binder. The insulating layer contains an insulating material and a third binder. The first binder and the second binder are nonaqueous binders. The third binder is an aqueous binder.

In the energy storage device of the present embodiment, at least one of a pair of electrodes 3 and 5 in an electrode assembly 2 includes an active material layer 3b or 5b, an intermediate layer 6, and an insulating layer 7 in contact with at least the intermediate layer, mentioned above. A binder contained in the insulating layer 7 is an aqueous binder, and each of binders contained in the active material layers 3b and 5b and the intermediate layer 6 is a nonaqueous binder. Furthermore, the intermediate layer 6 contains a hydrophobic carbonaceous material.

Thus, the aqueous binder contained in the insulating layer 7 is relatively high in polarity, and on the other hand, the nonaqueous binders contained in the active material layers 3b and 5b and the intermediate layer 6 and the carbonaceous material contained in the intermediate layer 6 are lower in polarity than the aqueous binder contained in the insulating layer 7. That is, the aqueous binder is low in affinity with the nonaqueous binder and the carbonaceous material, and the nonaqueous binder and the carbonaceous material are high in affinity to each other.

In the intermediate layer 6, the nonaqueous binder and the carbonaceous material, which are high in affinity to each other, are contained. Thus, the nonaqueous binder prevents the carbonaceous material from moving to the outside of the intermediate layer 6. Moreover, in the insulating layer 7, the aqueous binder, which is low in affinity with the carbonaceous material, is contained. Thus, the aqueous binder can prevent the carbonaceous material from moving into the insulating layer 7.

Since the carbonaceous material is prevented from intruding into the insulating layer 7, it is possible to prevent the lowering in insulation properties of the insulating layer 7 caused by the intrusion of the carbonaceous material. Thus, it is possible to provide an energy storage device having an insulating layer high in insulation properties.

The nonaqueous binder is contained in the active material layers 3b and 5b, and therefore, even in the case where the carbonaceous material contained in the intermediate layer 6 moves into the active material layers 3b and 5b, it is possible to prevent the carbonaceous material from moving into the insulating layer 7 through the active material layers 3b and 5b.

In the energy storage device of the present embodiment, the carbonaceous material is contained as a conductive additive in the active material layers 3b and 5b. In the active material layers 3b and 5b, the nonaqueous binder and the carbonaceous material, which are high in affinity to each other, are contained. Thus, the nonaqueous binder prevents the carbonaceous material from moving to the outside of the active material layers 3b and 5b. Moreover, in the insulating layer 7, the aqueous binder, which is low in affinity with the carbonaceous material, is contained. Thus, the aqueous binder can prevent the carbonaceous material contained in the active material layers 3b and 5b from moving into the insulating layer 7.

In the energy storage device of the present embodiment, inorganic particles are contained as an insulating material in the insulating layer 7. In the case where the carbonaceous material is contained in the intermediate layer 6 or the active material layers 3b and 5b and the inorganic particles are contained in the insulating layer 7, the carbonaceous material is relatively high in hydrophobicity and the inorganic particles are relatively high in hydrophilicity, and thus the inorganic particles having hydrophilicity prevent the carbonaceous material from moving into the insulating layer 7.

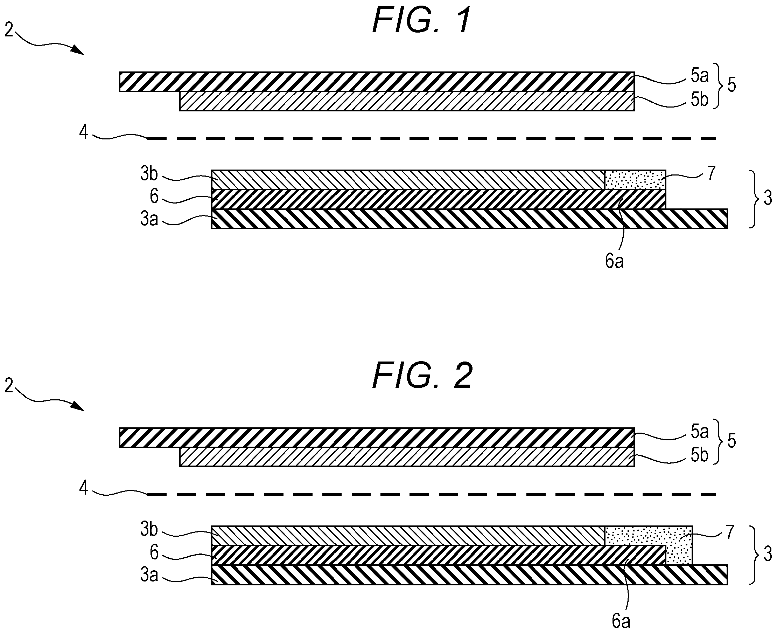

In the energy storage device of the present embodiment, as shown in Fig. 1 to Fig. 3, each of a pair of electrodes 3 and 5 in an electrode assembly 2 includes at least a current collecting substrate 3a or 5a and an active material layer 3b or 5b, and the active material layers 3b and 5b are each overlapped so as to face each other.

Moreover, an insulating layer 7 of one electrode is arranged so as to face at least a part of the end edge of the active material layer 5b in the other electrode.

As shown in Fig. 2, in one electrode 3 including an insulating layer 7, the insulating layer 7 may be arranged so as to further cover the face of the current collecting substrate 3a, which faces the other electrode 5.

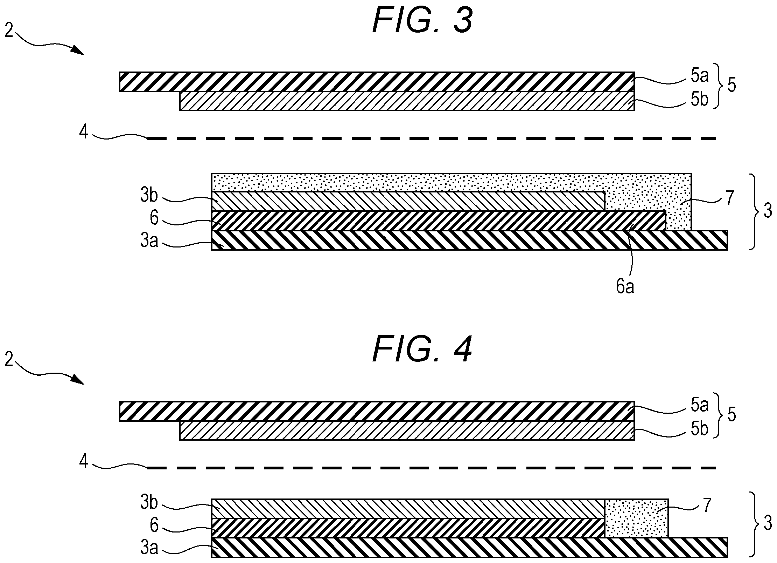

As shown in Fig. 3, in one electrode 3 including an insulating layer 7, the insulating layer 7 may be arranged so as to further cover the face of the active material layer 3b, which faces the other electrode 5.

As shown in Figs. 1 to 3, an intermediate layer 6 may have an intermediate layer-protruding portion 6a protruded outside from the end edge of the active material layer 3b or 5b. The intermediate layer 6 has the intermediate layer-protruding portion 6a, and therefore, even the end edge of the active material layer 3b or 5b can be in contact with the intermediate layer 6. As a result thereof, the peel strength of the active material layer 3b or 5b is enhanced.

As shown in Figs. 1 to 3, an insulating layer 7 may be arranged so as to cover an intermediate layer-protruding portion 6a. The insulating layer 7 covers the intermediate layer-protruding portion 6a, and therefore, the contact area with the intermediate layer 6 is increased. Meanwhile, in the insulating layer 7, an aqueous binder, which is low in affinity with the carbonaceous material, is contained. Thus, the aqueous binder can prevent the carbonaceous material from moving into the insulating layer 7.

As shown in Figs. 2 and 3, an insulating layer 7 may be arranged so as to cover an intermediate layer-protruding portion 6a while being in contact with a current collecting substrate 3a or 5a. That is, the insulating layer 7 may be arranged so as to cover the end edge of the intermediate layer 6. At the end edge of the intermediate layer 6, the intermediate layer 6 is exposed by the thickness of the intermediate layer 6. Thus, the insulating layer 7 covers the end edge of the intermediate layer 6, and therefore, the contact area with the intermediate layer 6 is increased. Meanwhile, in the insulating layer 7, an aqueous binder, which is low in affinity with the carbonaceous material, is contained. Thus, the aqueous binder can prevent the carbonaceous material from moving into the insulating layer 7.

As shown in Fig. 3, an insulating layer 7 may be arranged so as to cover an active material layer 3b or 5b and an intermediate layer-protruding portion 6a while being in contact with a current collecting substrate 3a or 5a. The insulating layer 7 may be arranged so as to cover only a part of the active material layer 3b or 5b.

For more details, for example, as shown in Fig. 1 to Fig. 3, an electrode assembly 2 in the energy storage device of the present embodiment includes a sheet-like positive electrode 3 and a sheet-like negative electrode 5 overlapped with the positive electrode 3 as a pair of electrodes. Moreover, the electrode assembly 2 includes a separator 4 arranged between the positive electrode 3 and the negative electrode 5.

For example, the electrode assembly 2 in the energy storage device 1 of the present embodiment forms a nonaqueous electrolyte secondary battery 1 such as a lithium ion secondary battery.

A negative electrode 5 includes a negative current collecting substrate 5a as a current collecting substrate, and moreover, includes a negative active material layer 5b, which contains a negative active material, as an active material layer.

In the meantime, a positive electrode 3 includes a positive current collecting substrate 3a as a current collecting substrate, and moreover, includes a positive active material layer 3b, which contains a positive active material and is arranged at least at one surface of the positive current collecting substrate 3a, as an active material layer. Furthermore, the positive electrode 3 includes an intermediate layer 6, which contains a carbonaceous material and is arranged between the positive current collecting substrate 3a and the positive active material layer 3b, and an insulating layer 7, which contains an insulating material.

The positive electrode 3 and the negative electrode 5 are overlapped via a separator 4 so that the negative active material layer 5b and the positive active material layer 3b face each other.

The intermediate layer 6, the positive active material layer 3b, and the insulating layer 7 in the positive electrode 3 each contain a binder. The binder contained in the insulating layer 7 is an aqueous binder, and each of the binders contained in the positive active material layer 3b and the intermediate layer 6 is a nonaqueous binder.

Since the binder contained in the insulating layer 7 is an aqueous binder, and each of the binders contained in the positive active material layer 3b and the intermediate layer 6 is a nonaqueous binder, the affinity between the aqueous binder and the nonaqueous binder is relatively low. Moreover, as described above, the aqueous binder is low in affinity with the carbonaceous material, and the nonaqueous binder is high in affinity with the carbonaceous material. Thus, as described above, the aqueous binder can prevent the carbonaceous material from moving into the insulating layer 7. Thus, it is possible to sufficiently enhance the insulation performance of the insulating layer 7. In the case where the aqueous binder contained in the insulating layer 7 is a binder which is soluble in water, the binder can more effectively prevent the carbonaceous material from moving into the insulating layer 7, and thus the aqueous binder is preferably a binder which is soluble in water (hereinafter, also referred to as water-soluble binder).

The binder contained in the insulating layer 7 is an aqueous binder which is dispersible or soluble in water.

As the aqueous binder, a water-soluble binder (aqueous binder which is soluble in water) having a solubility of not less than 1 part by mass thereof in 100 parts by mass of water at 20°C is preferred.

As the aqueous binder, preferred is at least one kind selected from the group consisting of polyethylene oxide (polyethylene glycol), polypropylene oxide (polypropylene glycol), polyvinyl alcohol, polyacrylic acid, polymethacrylic acid, polytetrafluoroethylene (PTFE), a styrene butadiene rubber (SBR), polyolefin, a nitrile-butadiene rubber and cellulose, and more preferred is at least one water-soluble binder selected from the group consisting of polyethylene oxide (polyethylene glycol), polypropylene oxide (polypropylene glycol), polyvinyl alcohol, polyacrylic acid and polymethacrylic acid.

On the other hand, the nonaqueous binder is a binder which is lower in water solubility than the aqueous binder.

As the nonaqueous binder, a binder having a solubility of less than 1 part by mass thereof in 100 parts by mass of water at 20°C is preferred.

Examples of the nonaqueous binder include polyvinylidene fluoride (PVDF), a copolymer of vinylidene fluoride and hexafluoropropylene, a copolymer of ethylene and vinyl alcohol, polyacrylonitrile, polyphosphazene, polysiloxane, polyvinyl acetate, polymethyl methacrylate, polystyrene, polycarbonate, polyamide, polyimide, polyamideimide, a crosslinked polymer of cellulose and chitosan pyrrolidone carboxylate, and a derivative of chitin or chitosan.

Examples of the derivative of chitosan include a polymer compound, glyceryl chitosan, and a crosslinked body of chitosan.

The nonaqueous binder contained in the intermediate layer 6 is preferably at least one kind selected from the group consisting of polyvinylidene fluoride, a derivative of chitosan and a polyimide in that they are higher in affinity with the carbonaceous material and capable of further preventing the carbonaceous material from diffusing into the insulating layer 7.

The nonaqueous binder contained in the positive active material layer 3b is preferably at least one kind selected from the group consisting of polyvinylidene fluoride, a copolymer of ethylene and vinyl alcohol and polymethyl methacrylate in that they are excellent in binding property or low in electrical resistance.

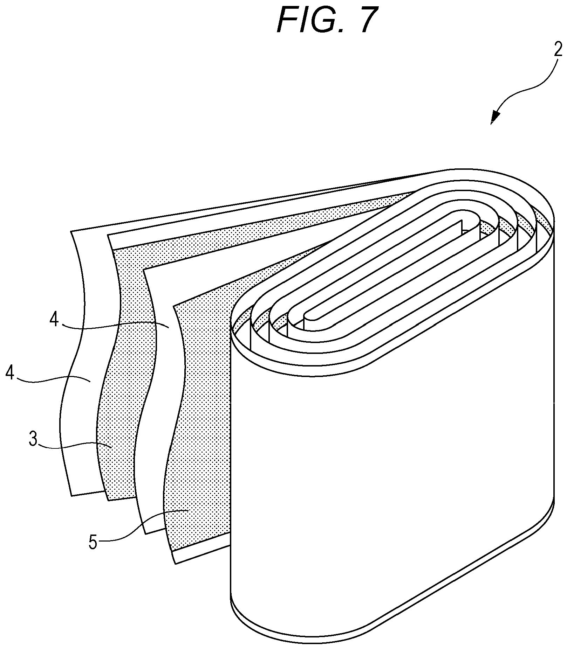

The electrode assembly 2 is formed in a belt-like shape. Moreover, for example, as shown in Fig. 7, the electrode assembly 2 is wound to be used.

As shown in Fig. 1 to Fig. 3 which are cross-sectional views obtained by cutting the electrode assembly 2 along the width direction of the electrode, the electrode assembly 2 includes a sheet-like positive electrode 3, a sheet-like negative electrode 5 and a sheet-like separator 4 arranged between the positive electrode 3 and the negative electrode 5.

The positive electrode 3 is formed in a rectangular shape such as a belt-like shape. The thickness of the positive electrode 3 is usually 35 to 250 µm.

For example, as shown in Fig. 1 to Fig. 3, the positive electrode 3 has a belt-like positive current collecting substrate 3a, a belt-like positive active material layer 3b arranged at the negative electrode 5 side from the positive current collecting substrate 3a, an intermediate layer 6 arranged between the positive current collecting substrate 3a and the positive active material layer 3b, and a belt-like insulating layer 7 covering at least one of the side faces (end faces) in the width direction of the intermediate layer 6.

The positive active material layer 3b is arranged so as to face the separator 4 and so as to be in contact with the separator 4 directly or via the insulating layer 7.

For example, as shown in Fig. 1 to Fig. 3, the negative electrode 5 has a belt-like negative current collecting substrate 5a, and a belt-like negative active material layer 5b arranged at the positive electrode 3 side from the negative current collecting substrate 5a.

The negative active material layer 5b of the negative electrode 5 is arranged so as to face the separator 4 and so as to be in contact with the separator 4. The thickness of the negative electrode 5 is usually 35 to 250 µm.

The separator 4 is formed in, for example, a belt-like shape and arranged between the positive electrode 3 and the negative electrode 5 in order to prevent the electrical connection between the positive electrode 3 and the negative electrode 5. The thickness of the separator 4 is usually 5 to 50 µm.

In the electrode assembly 2, for example, as shown in Fig. 1 to Fig. 3, the negative active material layer 5b has an end edge arranged outside from the end edge of the positive active material layer 3b facing the negative active material layer 5b.

For example, as shown in Fig. 1 to Fig. 3, the intermediate layer 6 has an intermediate layer-protruding portion 6a protruded outside from the end edge of the positive active material layer 3b, and the intermediate layer-protruding portion 6a is arranged so as to face the end edge of the negative active material layer 5b.

For example, as shown in Fig. 1 to Fig. 3, the insulating layer 7 is arranged so as to face the end edge of the negative active material layer 5b, and furthermore, the insulating layer 7 is arranged so as to cover the negative electrode 5 side of the intermediate layer-protruding portion 6a while being in contact with the end edge of the positive active material layer 3b.

Preferably, in the electrode assembly 2, as shown in Fig. 1 to Fig. 3, in the width direction of the electrode, both end edges of the negative active material layer 5b are arranged outside from both end edges of the positive active material layer 3b, respectively. That is, at both sides in the width direction of the positive electrode and the negative electrode, the respective end edges of the negative active material layer 5b are protruded outside from the respective end edges of the positive active material layer 3b.

The electrode assembly 2 has such a configuration, and therefore, ion components such as Li ions which have moved from the positive active material layer 3b to the negative electrode 5 side at the time of charging can be sufficiently occluded into the negative active material in the negative active material layer 5b.

Moreover, at one side in the width direction of the electrode assembly 2, the end edge of the negative active material layer 5b is arranged inside from the end edge of the intermediate layer 6 of the positive electrode 3, and outside from the end edge of the positive active material layer 3b of the positive electrode 3. That is, the negative active material layer 5b is protruded outside from the end edge of the positive active material layer 3b, and the intermediate layer 6 is protruded outside from the protruding end edge of the negative active material layer 5b. Furthermore, the protruding portion of such an intermediate layer (intermediate layer-protruding portion 6a) faces the end edge of the negative active material layer 5b.

Furthermore, at one side in the width direction of the electrode assembly 2, at least a part of the insulating layer 7 in the positive electrode 3 faces the end edge of the negative active material layer 5b. Thus, a short circuit caused by a foreign substance which has intruded into the end portion of the electrode assembly 2 can be prevented by the insulating layer 7.

In this connection, although a short circuit caused by a foreign substance can also be prevented by the separator 4, there is a case where a foreign substance breaks through the separator. Even in such a case, it is possible to prevent a short circuit by the insulating layer 7.

In this connection, there is a case where a short circuit is not only caused by a foreign substance but also caused accompanied with the contact between the positive electrode 3 and the negative active material layer 5b by shrinkage or displacement of the separator. Even in such a case, it is possible to prevent a short circuit by the insulating layer 7.

Meanwhile, at least at a part of the other side in the width direction of the electrode assembly 2, the end edge of the negative active material layer 5b is arranged outside from the end edge of the positive electrode 3. Moreover, the negative current collecting substrate 5a has a portion protruded outside from the end edge of the negative active material layer 5b. That is, the end edge of the negative current collecting substrate 5a is protruded outside from the end edge of the negative active material layer 5b.

Such a configuration makes it easy to take in and out the electricity from the current collecting substrate (negative current collecting substrate 5a).

Although the material for the positive current collecting substrate 3a is not particularly limited, for example, aluminum is employed. The shape of the positive current collecting substrate 3a is usually a foil-like shape. The thickness of the positive current collecting substrate 3a is usually 5 to 50 µm.

For example, the positive active material layer 3b extends along at least one surface of the positive current collecting substrate 3a.

The positive active material layer 3b contains a positive active material, a conductive additive, and a binder. The thickness of the positive active material layer 3b is usually 30 to 200 µm.

Examples of the positive active material include a material capable of occluding and releasing lithium ions.

The positive active material is usually formed in a particle-like shape.

Examples of the positive active material include a composite oxide represented by LiₓMO_{y} (M represents at least one transition metal) (such as LiₓCoO₂, LiₓNiO₂, LiₓMn₂O₄, LiₓMnO₃, LiₓNi_{y}Co_{(1-y)}O₂, LiₓNi_{y}Mn_{z}Co_{(1-y-z)}O₂, and LiₓNi_{y}Mn_{(2-y)}O₄).

Moreover, examples of the positive active material include a polyanion compound represented by Li_{w}Meₓ(XO_{y})_{z} (Me represents at least one transition metal and examples of X include P, Si, B and V) (such as LiFePO₄, LiMnPO₄, LiNiPO₄, LiCoPO₄, Li₃V₂(PO₄)₃, Li₂MnSiO₄, and Li₂CoPO₄F).

An element in these compounds or a part of the polyanion may be substituted with another element or anionic species.

Moreover, the surface of the positive active material may be coated with a metal oxide such as ZrO₂, MgO and Al₂O₃ or carbon.

Furthermore, although examples of the positive active material include disulfide, a conductive polymer compound such as polypyrrole, polyaniline, polyparastyrene, polyacetylene and a polyacene-based material, and a pseudo graphite structure carbonaceous material, the positive active material is not limited thereto.

As the positive active material, these compounds may be used alone and may be used as a mixture of two or more thereof.

The conductive additive is not particularly limited, and examples thereof include a carbonaceous material such as ketjen black, acetylene black, graphite, and coke powder.

For the binder contained in the positive active material layer 3b, both of the aqueous binder and the nonaqueous binder described above can be used. As the binder contained in the positive active material layer 3b, the nonaqueous binder is preferred.

In the positive electrode 3, the positive active material layer 3b may be formed at each of both faces of the positive current collecting substrate 3a.

It is preferred that the intermediate layer 6 have sufficient adhesive properties to the current collecting substrate (positive current collecting substrate 3a). That is, it is preferred that the intermediate layer 6 have a sufficiently high peel strength to the current collecting substrate.

It is preferred that the intermediate layer 6 be higher in electron conductivity than the active material layer (positive active material layer 3b).

The intermediate layer 6 contains at least a carbonaceous material as a conductive material, and a binder.

Since the intermediate layer 6 contains a carbonaceous material, the intermediate layer 6 forms an electronic path between the positive current collecting substrate 3a and the positive active material layer 3b. Moreover, since the intermediate layer 6 contains a binder (binding agent), the peeling of each of the positive current collecting substrate 3a and the positive active material layer 3b can be prevented.

In this connection, the thickness of the intermediate layer 6 is usually 0.1 to 10 µm.

The carbonaceous material usually has an electrical conductivity of not less than 10⁻⁶ S/m.

Examples of the carbonaceous material include carbon black and graphite.

For example, an electrode comprises the insulating layer 7 in order to prevent a short circuit between electrodes (between the positive electrode 3 and the negative electrode 5).

The insulating layer 7 contains at least an insulating material and a binder.

For example, as shown in Fig. 1, the insulating layer 7 is arranged so as to face the end edge of the negative active material layer 5b, and furthermore, arranged so as to cover the negative electrode 5 side of the intermediate layer-protruding portion 6a while being in contact with the end edge (end face) of the positive active material layer 3b.

The insulating layer 7 is arranged in this way, and therefore the insulating layer 7 exists at a position facing the end edge of the negative active material layer 5b. Thus, it is possible to prevent a short circuit caused by a foreign substance, which has intruded into the end portion of the electrode assembly 2, by the insulating layer 7.

In this connection, there is a case where a short circuit is not only caused by a foreign substance but also caused accompanied with the contact between the positive electrode 3 and the negative active material layer 5b caused by contraction or displacement of the separator. Even in such a case, it is possible to prevent a short circuit by the insulating layer 7.

Moreover, for example, as shown in Fig. 2, it is preferred that the insulating layer 7 be arranged so as to cover the negative electrode 5 side of the intermediate layer-protruding portion 6a while being in contact with the positive current collecting substrate 3a outside from the intermediate layer-protruding portion 6a.

The insulating layer 7 is arranged in this way, and therefore the positive current collecting substrate 3a facing the end edge of the negative active material layer 5b is further widely covered with the insulating layer 7. Thus, it is possible to further surely prevent a short circuit caused by a foreign substance which has intruded into the end portion of the electrode assembly 2.

In this connection, there is a case where a short circuit is not only caused by a foreign substance but also caused accompanied with the contact between the positive current collecting substrate 3a and the negative active material layer 5b caused by contraction or displacement of the separator. Even in such a case, it is possible to prevent a short circuit by the insulating layer 7.

Moreover, for example, as shown in Fig. 3, the insulating layer 7 may be arranged so as to further cover the face of the positive active material layer 3b which faces the negative electrode 5.

The insulating layer 7 arranged in this way is formed by a porous material so that Li ions and the like can move between the positive electrode 3 and the negative electrode 5.

In the case where the electrical resistance of the insulating layer 7 is higher than the electrical resistance of the active material layer (positive active material layer 3b), the insulating layer 7 is formed as mentioned above, and thus it is possible to suppress a short circuit caused by the contact between the active material layer (positive active material layer 3b) and the counter electrode (negative electrode 5). In the case where the electrical resistance of the negative active material layer 5b is smaller than that of the positive active material layer 3b, it is preferred that the above-mentioned insulating layer 7 be formed on the negative electrode rather than the positive electrode.

The insulating material is higher in electrical resistance than the carbonaceous material.

For details, the insulating material has an electrical conductivity of less than 10⁻⁶ S/m.

Examples of the insulating material include inorganic particles and a resin.

Examples of the inorganic particles include oxide particles, nitride particles, ion crystal particles, covalent crystal particles, clay particles, and particles of substances derived from mineral resources and artificial substances thereof.

Examples of fine oxide particles include particles made from iron oxide, SiO₂, Al₂O₃, TiO₂, BaTiO₂, ZrO, an alumina-silica composite oxide, and the like.

Examples of the nitride particles include particles made from aluminum nitride, silicon nitride, and the like.

Examples of the ion crystal particles include particles made from calcium fluoride, barium fluoride, barium sulfate, and the like.

Examples of the covalent crystal particles include particles made from silicon, diamond, and the like.

Examples of the clay particles include particles made from talc, montmorillonite, and the like.

Examples of the particles made from substances derived from mineral resources or artificial substances thereof include particles made from boehmite (hydrated alumina), zeolite, apatite, kaolin, mullite, spinel, olivine, sericite, bentonite, mica, and the like.

As the inorganic particles, one kind of particles mentioned above, a mixture thereof, or a composite thereof can be employed.

As the inorganic particles, preferred is at least one kind of SiO₂ particles, Al₂O₃ particles, boehmite (hydrated alumina), and alumina-silica composite oxide particles.

The separator 4 allows the passage of an electrolyte solution 9 (described below) while preventing the electrical connection between the positive electrode 3 and the negative electrode 5.

From the viewpoint of being capable of further surely preventing a short circuit, it is preferred that the width of the separator 4 be greater than the width of the positive active material layer 3b. Moreover, the width of the separator 4 is preferably greater than the width of the negative active material layer 5b.

The thickness of the separator 4 is usually 5 to 50 µm.

The separator 4 may be made of a single layer and may be made of a plurality of layers.

Although the material for the negative current collecting substrate 5a is not particularly limited, for example, copper is employed.

The shape of the negative current collecting substrate 5a is usually a foil-like shape. The thickness of the negative current collecting substrate 5a is usually 5 to 50 µm.

For example, the negative active material layer 5b extends along at least one surface of the negative current collecting substrate 5a.

The negative active material layer 5b contains a negative active material and a binder, and can further contain a conductive additive. The thickness of the negative active material layer 5b is usually 30 to 200 µm.

The negative active material is a substance capable of contributing to the electrode reaction of charge reaction and discharge reaction in the negative electrode 5. The negative active material is usually formed in a particle-like shape.

The negative active material is not particularly limited, and for example, a carbon-based substance such as amorphous carbon, hardly graphitized carbon, easily graphitized carbon, and graphite can be used.

As the binder contained in the negative active material layer 5b, the same binder as the above-described binder contained in the positive active material layer 3b is employed.

In this connection, in the negative electrode 5, the negative active material layer 5b may be formed at each of both faces of the negative current collecting substrate 5a.

In the electrode assembly 2 mentioned above, as shown in Fig. 1 to Fig. 3, the intermediate layer 6 has an intermediate layer-protruding portion 6a. On the other hand, as shown in Fig. 4, the electrode assembly 2 may have no intermediate layer-protruding portion 6a in the intermediate layer 6. That is, in the electrode assembly 2, the intermediate layer 6 and the positive active material layer 3b may be formed so as to have the same length in the width direction, and each of both end edges in the width direction of the intermediate layer 6 and each of both end edges in the widthwise direction of the positive active material layer 3b may be overlapped with each other in the thickness direction.

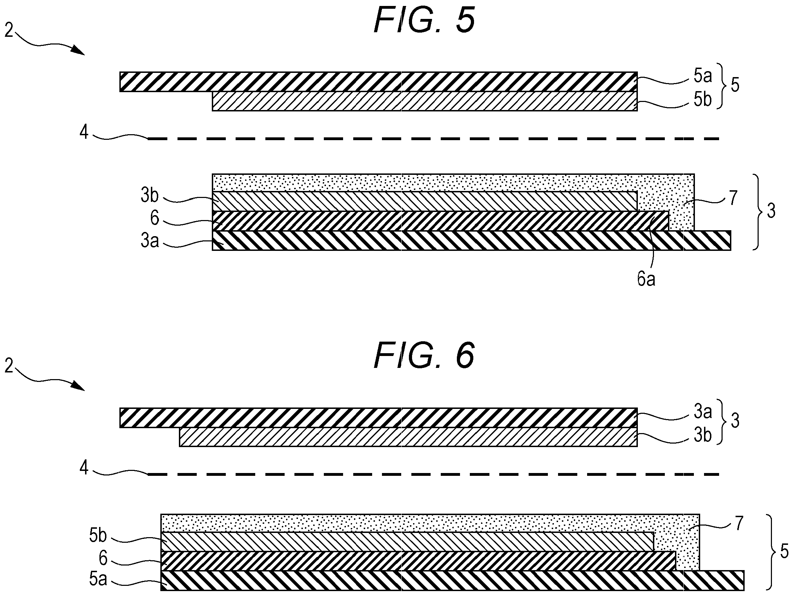

Moreover, in the electrode assembly 2 mentioned above, as shown in Fig. 1 to Fig. 3, both end edges in the width direction of the negative active material layer 5b are arranged outside from both end edges of the positive active material layer, respectively. However, in the electrode assembly 2, as shown in Fig. 5, the positive active material layer 3b and the negative active material layer 5b may be formed so as to have the same length in the width direction, and both end edges in the width direction of the positive active material layer 3b may be opposite to both end edges in the width direction of the negative active material layer 5b, respectively.

Moreover, in the electrode assembly 2 mentioned above, as shown in Fig. 1 to Fig. 3, the positive electrode 3 includes the intermediate layer 6, but, in an electrode assembly 2, as shown in Fig. 6, the negative electrode 5 may include the intermediate layer 6.

In this connection, the embodiments of the intermediate layer 6 and the insulating layer 7 in the positive electrode 3 described in Fig. 1 to Fig. 3, and the binders contained in respective layers of the positive electrode 3 can be similarly employed as those for the negative electrode 5.

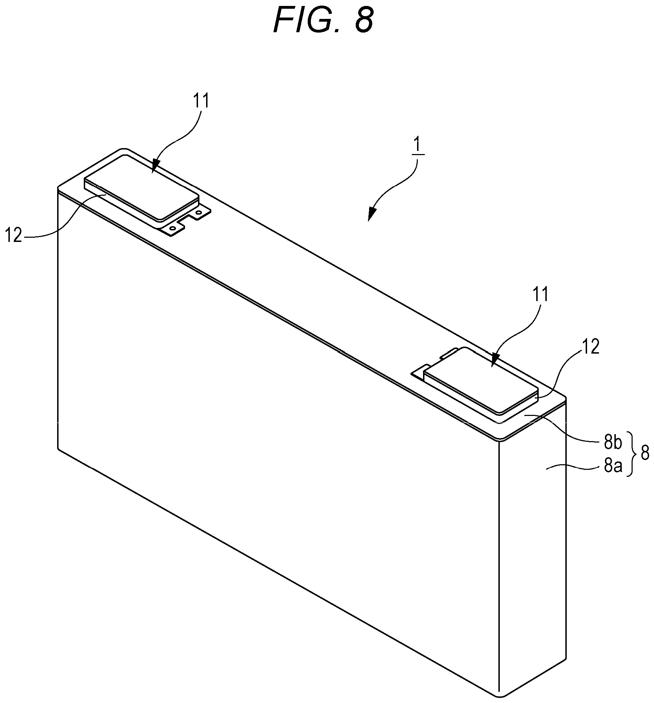

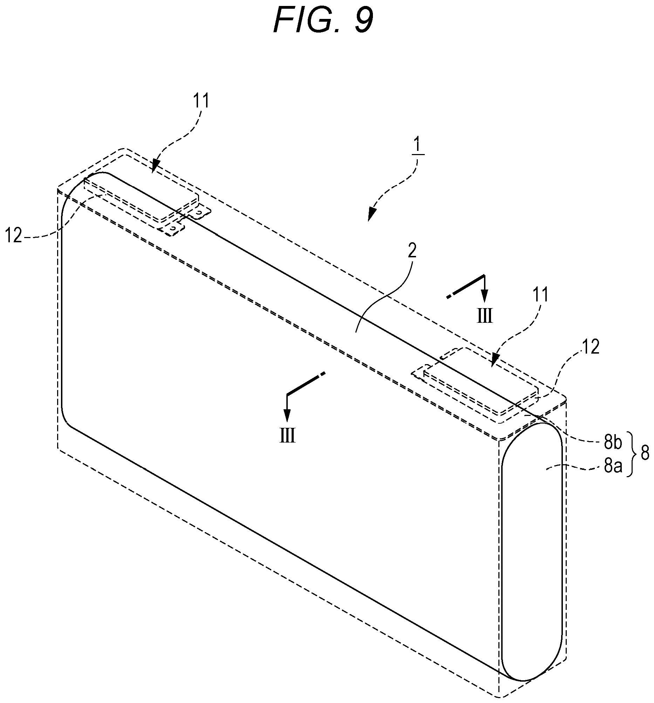

One example of an energy storage device 1 of the present embodiment includes a nonaqueous electrolyte secondary battery 1 shown in Fig. 8 to Fig. 11.

As shown in Fig. 8 to Fig. 11, the nonaqueous electrolyte secondary battery 1 mentioned above includes the above-described electrode assembly 2. For example, the electrode assembly 2 forms the nonaqueous electrolyte secondary battery 1 in such a winding state as shown in Fig. 7.

For details, the nonaqueous electrolyte secondary battery mentioned above includes a case 8, an electrolyte solution 9 accommodated in the case 8, two external gaskets 12 attached on the outer face of the case 8, an electrode assembly 2 accommodated in the case 8, two current collecting parts 10 electrically connected to the electrode assembly 2, and two external terminals 11 electrically connected to the two current collecting parts 10, respectively.

As shown in Fig. 8, the case 8 has a case main body 8a which has an opening in one direction and accommodates the electrode assembly 2, and a plate-like lid body 8b which closes the opening of the case main body 8a. For example, the case main body 8a and the lid body 8b are formed by an aluminum-based metal material such as aluminum and an aluminum alloy, and are welded to each other.

For example, the shape seen from one side of the lid body 8b is a rectangular shape. The lid body 8b is formed so as to air-tightly close the opening of the case main body 8a.

Moreover, two openings are formed in the lid body 8b.

On the outer face of the lid body 8b, two external gaskets 12 are attached. An opening is formed in each of the external gaskets 12. The lid body 8b and the external gaskets 12 are arranged so that one opening of the lid body 8b and the opening of one external gasket 12 are continued to each other. The same holds true for the other opening of the lid body 8b and the opening of the other external gasket 12. Inside the openings continued to each other, parts of respective external terminals 11 are arranged. Moreover, an insulating member which is not illustrated is further arranged between each of the external terminals 11 and the lid body 8b, and each of the external terminals 11 and the lid body 8b are insulated with the insulating member.

The external terminals 11 are each connected to the two current collecting parts 10, which are connected to the electrode assembly 2, respectively. Moreover, each of the current collecting parts 10 is electrically connected to the electrode assembly 2. That is, each of the external terminals 11 is electrically connected to the electrode assembly 2 via each of the two current collecting parts 10.

For example, the external terminal 11 is formed by an aluminum-based metal material such as aluminum and an aluminum alloy.

With regard to the external gasket 12, the current collecting part 10, and the external terminal 11, there are ones for the positive electrode and ones for the negative electrode.

The external gasket 12, the current collecting part 10, and the external terminal 11 for the positive electrode are each arranged at one end side in the longitudinal direction of the lid body 8b. On the other hand, the external gasket 12, the current collecting part 10, and the external terminal 11 for the negative electrode are each arranged at the other end side in the longitudinal direction of the lid body 8b.

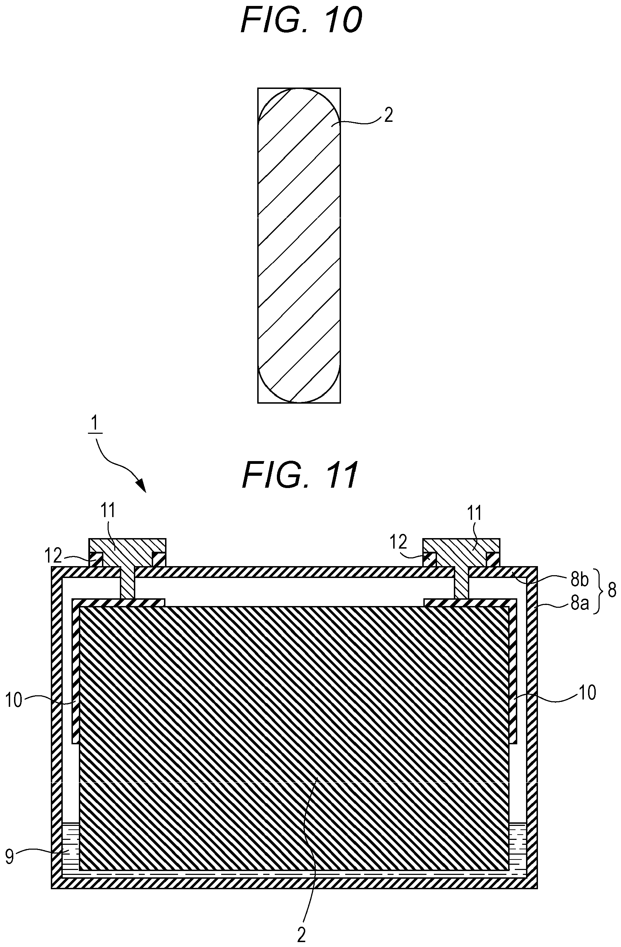

As shown in Fig. 11, the electrode assembly 2 is accommodated inside the case main body 8a of the case 8.

Inside the case 8, one electrode assembly 2 may be accommodated, and a plurality of electrode assemblies may be accommodated. In the latter case, the plurality of electrode assemblies are electrically connected in parallel to each other.

As shown in Fig. 11, the electrolyte solution 9 as an electrolyte is accommodated inside the case main body 8a, and the electrode assembly 2 is immersed in the electrolyte solution 9. That is, the electrode assembly 2 and the electrolyte solution 9 are included inside the case main body 8a.

The electrolyte solution 9 (nonaqueous electrolyte) is prepared by dissolving an electrolyte salt in an organic solvent.

Examples of the organic solvent include nonaqueous solvents such as ethylene carbonate, propylene carbonate, butylene carbonate, trifluoropropylene carbonate, γ-butyrolactone, γ-valerolactone, sulfolane, 1,2-dimethoxyethane, 1,2-diethoxyethane, tetrahydrofuran, 2-methyltetrahydrofuran, 2-methyl-1,3-dioxolane, dioxolane, fluoroethyl methyl ether, ethylene glycol diacetate, propylene glycol diacetate, ethylene glycol dipropionate, propylene glycol dipropionate, methyl acetate, ethyl acetate, propyl acetate, butyl acetate, methyl propionate, ethyl propionate, propyl propionate, dimethyl carbonate, diethyl carbonate, ethyl methyl carbonate, methyl propyl carbonate, ethyl propyl carbonate, dipropyl carbonate, methyl isopropyl carbonate, ethyl isopropyl carbonate, diisopropyl carbonate, dibutyl carbonate, acetonitrile, fluoroacetonitrile, alkoxy- and halogen-substituted cyclic phosphazenes or linear phosphazenes including ethoxypentafluoro cyclotriphosphazene, diethoxytetrafluoro cyclotriphosphazene, phenoxypentafluoro cyclotriphosphazene and the like, phosphoric acid esters including triethyl phosphate, trimethyl phosphate, trioctyl phosphate and the like, boric acid esters including triethyl borate, tributyl borate and the like, N-methyloxazolidinone, and N-ethyloxazolidinone.

No particular limitation is put on the electrolyte salt, and examples thereof include ionic compounds such as LiClO₄, LiBF₄, LiAsF₆, LiPF₆, LiCF₃SO₃, LiN(SO₂CF₃)₂, LiN(SO₂C₂F₅)₂, LiN(SO₂CF₃)(SO₂C₄F₉), LiSCN, LiBr, LiI, Li₂SO₄, Li₂B₁₀Cl₁₀, NaClO₄, NaI, NaSCN, NaBr, KClO₄ and KSCN, and mixtures of two or more thereof.

In this connection, the electrolyte solution 9 (nonaqueous electrolyte) can further contain a known additive.

As the electrolyte solution 9 (nonaqueous electrolyte), a solvent prepared by mixing ethylene carbonate, dimethyl carbonate and methyl ethyl carbonate is preferred in that the conductivity of Li ions is heightened.

Subsequently, the method for producing a nonaqueous electrolyte secondary battery 1 as one example of the energy storage device of the present embodiment will be described.

For example, an electrode assembly 2 constituting the nonaqueous electrolyte secondary battery 1 is produced by overlapping (superimposing) a sheet-like positive electrode 3 and a sheet-like negative electrode 5 via a separator 4.

Moreover, the nonaqueous electrolyte secondary battery 1 is produced by accommodating the prepared electrode assembly 2 and an electrolyte solution 9 in a case 8.

For details, for example, the method for producing an electrode assembly 2 includes a negative electrode-preparing step of preparing a negative electrode 5, a positive electrode-preparing step of preparing a positive electrode 3, and an overlapping step of overlapping the negative electrode 5 and the positive electrode 3. In the negative electrode-preparing step, a negative active material layer 5b is formed from a negative composite containing a negative active material and a solvent. The positive electrode-preparing step includes an intermediate layer-forming step of forming an intermediate layer 6, a positive active material layer-forming step of forming a positive active material layer 3b, and an insulating layer-forming step of forming an insulating layer 7. The intermediate layer 6 is formed by applying a composition for an intermediate layer containing a carbonaceous material, a nonaqueous binder and a solvent to one face of a positive current collecting substrate 3a. A positive active material layer 3b is formed by applying a positive composite containing a positive active material, a nonaqueous binder and a solvent on the intermediate layer. An insulating layer 7 is formed from a composition for an insulating layer containing an insulating material, an aqueous binder and a solvent.

In the positive active material layer-forming step, in order to form an intermediate layer-protruding portion 6a, the positive composite can be applied so that at least a part of the intermediate layer is protruded outside from the applied positive composite.

In the insulating layer-forming step, the composition for an insulating layer can be applied so that the end edge of the positive active material layer and the composition for an insulating layer to be applied are in contact with each other. Moreover, the composition for an insulating layer can be applied so that the exposed face of a portion protruded outside of the intermediate layer is covered.

In the overlapping step, a positive electrode 3 and a negative electrode 5 can be overlapped so that the formed negative active material layer 5b and the formed positive active material layer 3b face each other, and furthermore, at least a part of the end edge of the negative active material layer 5b faces the insulating layer 7.

In the negative electrode-preparing step, for example, a negative active material and a binder are mixed, and the mixture is added to a solvent and kneaded to prepare a negative composite. The negative composite is applied to one face of a belt-like negative current collecting substrate 5a. The negative composite is applied so that the width of the negative active material layer 5b is wider than that of the positive active material layer 3b in the width direction of the negative current collecting substrate 5a. Then, the solvent is evaporated from the applied negative composite.

Thus, a negative electrode 5 in which the negative active material layer 5b is formed on the negative current collecting substrate 5a is prepared.

In the positive electrode-preparing step, each of an intermediate layer-forming step, a positive active material layer-forming step, and an insulating layer-forming step is performed.

In the intermediate layer-forming step, for example, a carbonaceous material and a nonaqueous binder are mixed, and the mixture is added to a solvent and kneaded to prepare a composition for an intermediate layer. The composition for an intermediate layer is applied to one face of a positive current collecting substrate 3a. Furthermore, the solvent is evaporated from the applied composition for an intermediate layer.

In the intermediate layer-forming step, for example, a composition for an intermediate layer is applied to one face of a positive current collecting substrate 3a so that a belt-like portion on which the composition for an intermediate layer is not applied is left at one side in the width direction of the belt-like positive current collecting substrate 3a.

In the positive active material layer-forming step, for example, a positive active material, a carbonaceous material as a conductive additive, and a nonaqueous binder are mixed, and the mixture is added to a solvent and kneaded to prepare a positive composite. The positive composite is applied on the intermediate layer. Then, the solvent is evaporated from the applied positive composite.

When the positive composite is applied on the intermediate layer, the intermediate layer may still contain a solvent or the solvent may have been already evaporated from the intermediate layer by drying.

In the positive active material layer-forming step, for example, a positive composite is applied on the intermediate layer so that a belt-like portion on which the positive composite is not applied is left at a side where a portion on which the composition for an intermediate layer is not applied is provided in the positive current collecting substrate 3a.

In the insulating layer-forming step, for example, an insulating material and an aqueous binder are mixed, and the mixture is added to a solvent and kneaded to prepare a composition for an insulating layer. The composition for an insulating layer is applied on the intermediate layer. Then, the solvent is evaporated from the applied composition for an insulating layer.

When the composition for an insulating layer is applied, the positive active material layer or the intermediate layer may still contain a solvent or the solvent may have been already evaporated from the positive active material layer or the intermediate layer by drying.

In the insulating layer-forming step, for example, a composition for an insulating layer is applied on a portion on which the positive composite is not applied in the intermediate layer.

Moreover, in the insulating layer-forming step, for example, a composition for an insulating layer can be applied so as to further cover a part of the positive current collecting substrate 3a.

Moreover, in the insulating layer-forming step, for example, furthermore, a composition for an insulating layer can be applied so as to thoroughly cover the surface of the positive active material layer.

In the positive electrode-preparing step, each step can be separately performed. Specifically, in the intermediate layer-forming step, the solvent is evaporated from the intermediate layer, after which a positive active material layer-forming step can be performed. Then, in the positive active material layer-forming step, the solvent is evaporated from the positive composite, after which an insulating layer-forming step can be performed.

On the other hand, in the positive electrode-preparing step, the composition for an intermediate layer is applied in the intermediate layer-forming step, after which a positive active material layer-forming step and an insulating layer-forming step can be simultaneously performed. That is, before the solvent is completely evaporated from the intermediate layer, a positive composite and a composition for an insulating layer can be simultaneously applied along the longitudinal direction of the belt-like current collecting substrate so that the positive composite and the composition for an insulating layer are adjacent to each other.

In the positive electrode-preparing step, even when a positive composite and a composition for an insulating layer are simultaneously applied in this way, the positive composite contains the above-mentioned nonaqueous binder and the composition for an insulating layer contains the above-mentioned aqueous binder. Thus, the affinity between the respective binders is relatively low and the respective binders can be thus prevented from moving between the applied positive composite and the applied composition for an insulating layer.

Moreover, when the composition for an intermediate layer contains a carbonaceous material and the composition for an insulating layer contains inorganic particles, the carbonaceous material is relatively high in hydrophobicity and the inorganic particles are relatively high in hydrophilicity, and thus the inorganic particles having hydrophilicity can prevent the carbonaceous material from moving into the composition for an insulating layer.

In this connection, as the application methods in the positive electrode-preparing step and the negative electrode-preparing step, a general method is employed.

In the overlapping step, a positive electrode 3, a negative electrode 5 and a separator 4 are overlapped in a state where the respective longitudinal directions are aligned. Specifically, a positive electrode 3 and a negative electrode 5 are disposed so that the positive active material layer 3b and the negative active material layer 5b face each other, and a separator 4 is disposed between the positive electrode 3 and the negative electrode 5. Furthermore, the positive electrode 3 and the negative electrode 5 are disposed and overlapped so that the end edge of the negative active material layer 5b faces the insulating layer 7 of the positive electrode 3 at one side in the width direction of the negative current collecting substrate 5a.

For example, a nonaqueous electrolyte secondary battery is produced in the following manner.

That is, a current collecting part 10 is attached to each of the positive electrode 3 and the negative electrode 5 in the prepared electrode assembly 2. Next, the electrode assembly 2 and the current collecting parts 10 attached to the electrode assembly 2 are disposed inside the case main body 8a of the case 8. In the case where there are a plurality of electrode assemblies 2, for example, the current collecting parts 10 of the electrode assemblies 2 are electrically connected in parallel to each other to be disposed inside the case main bodies 8a. Then, by caulking of rivet or welding, the external terminal 11 inside the external gasket 12 attached to the lid body 8b and the current collecting parts 10 are connected, after which the lid body 8b is attached to the case main body 8a.

Subsequently, an electrolyte solution 9 is injected into the case 8 through a liquid injection hole provided in the case 8. Then, the liquid injection hole is sealed. As the electrolyte solution 9, for example, an electrolyte solution prepared by blending LiPF₆ into a mixed solvent of ethylene carbonate (EC) : dimethyl carbonate (DMC) : ethyl methyl carbonate (EMC) = 3 : 2 : 5 (volume ratio) is employed. Furthermore, a known additive may be added to the electrolyte solution 9.

As stated above, a nonaqueous electrolyte secondary battery can be produced.

In the above-mentioned embodiment, a sheet-like positive electrode 3 and a sheet-like negative electrode 5 are overlapped via a separator, after which those are wound to form an electrode assembly as shown in Fig. 7. However, the electrode assembly of the present embodiment is not limited to a winding type assembly, and for example, the electrode assembly may be a stacked type assembly prepared by stacking a plurality of positive electrodes and a plurality of negative electrodes. With regard to the positive electrode or the negative electrode which forms a stacked type electrode assembly, an intermediate layer-protruding portion 6a and an insulating layer 7 may be arranged at both end parts in the width direction and both end parts in the longitudinal direction orthogonal to the width direction.

In the above-mentioned embodiment, although a nonaqueous electrolyte secondary battery as an energy storage device is described as an example, the energy storage device in accordance with one embodiment of the present invention is not limited to the nonaqueous electrolyte secondary battery, and for example, the energy storage device may be a capacitor. The energy storage device in accordance with one embodiment of the present invention is preferably a nonaqueous electrolyte secondary battery, more preferably a lithium ion secondary battery. Moreover, the energy storage device in accordance with one embodiment of the present invention may be a capacitor, and specifically, a lithium ion capacitor or an ultracapacitor.

Moreover, the present invention relates not only to the above-mentioned energy storage device but also to an energy storage module including at least one energy storage device mentioned above.

For example, an energy storage module 20 in accordance with one embodiment of the present invention includes a plurality of energy storage devices exemplified above. Moreover, the energy storage module includes a plurality of bus bar members 13, each of which electrically connects energy storage devices.

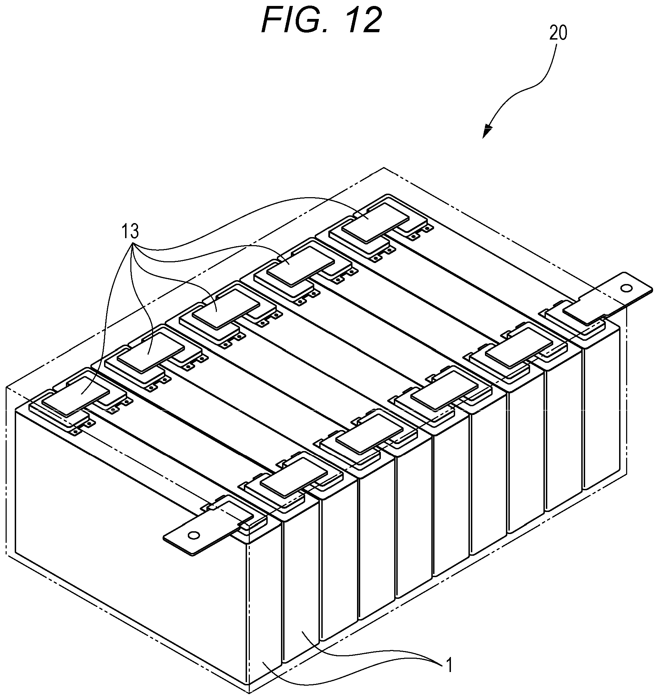

An example of the energy storage module 20 of the present embodiment is shown in Fig. 12.

In the energy storage module 20 of the present embodiment, for example, a plurality of energy storage devices 1 (nonaqueous electrolyte secondary batteries 1), each of which is formed into a rectangular shape in a top view, are arranged so as to line up in the lateral direction of the energy storage device 1 when seen from the upper side.

Moreover, energy storage devices 1 adjacent to each other are in contact with each other.

In the energy storage module 20, energy storage devices 1 adjacent to each other are electrically connected to each other by a bus bar member 13. Then, the energy storage module 20 is constituted so as to be charged and discharged by all the respective energy storage devices 1 forming the module.

According to a first aspect of the invention, the energy storage device exerts an effect such that the device has an insulating layer excellent in insulation properties.

## Claims

1. An energy storage device comprising an electrode assembly having a pair of electrodes overlapped with each other,
at least one of the electrodes including a current collecting substrate, an active material layer arranged on the current collecting substrate, an intermediate layer arranged between the current collecting substrate and the active material layer, and an insulating layer arranged on the current collecting substrate and in contact with at least the intermediate layer,
the active material layer containing an active material and a first binder,
the intermediate layer containing a carbonaceous material and a second binder,
the insulating layer containing an insulating material and a third binder,
the second binder being a nonaqueous binder, and
the third binder being an aqueous binder.

2. The energy storage device according to claim 1, wherein the first binder is a nonaqueous binder.

3. The energy storage device according to claim 2, wherein the active material layer contains a carbonaceous material.

4. The energy storage device according to any one of claims 1 to 3, wherein the insulating material comprises inorganic particles.

5. The energy storage device according to any one of claims 1 to 4, wherein each of the pair of electrodes includes at least the active material layer and the active material layers are each arranged to face each other, and
the insulating layer of one electrode is arranged to face at least a part of the end edge of the active material layer in the other electrode.

6. The energy storage device according to any one of claims 1 to 5, wherein, in one electrode, the insulating layer is arranged to cover the face of the active material layer, the face of the active material layer facing the other electrode.

7. The energy storage device according to any one of claims 1 to 6, wherein, in one electrode, the insulating layer is arranged to cover the face of the current collecting substrate, the face of the current collecting substrate facing the other electrode.

8. The energy storage device according to any one of claims 1 to 7, wherein the intermediate layer has an intermediate layer-protruding portion protruded outside from the end edge of the active material layer, and
the insulating layer is arranged to cover the intermediate layer-protruding portion while being in contact with the current collecting substrate.

9. The energy storage device according to any one of claims 1 to 7, wherein the pair of electrodes corresponds to a positive electrode and a negative electrode, respectively;
the positive electrode has a positive active material layer as the active material layer, the intermediate layer, and the insulating layer;
the negative electrode has a negative active material layer as the active material layer;
the negative active material layer has an end edge arranged outside from the end edge of the positive active material layer facing the negative active material layer;
the intermediate layer has an intermediate layer-protruding portion protruded outside from the end edge of the positive active material layer; and
the insulating layer is arranged to face the end edge of the negative active material layer and is arranged to cover a surface of the intermediate layer-protruding portion, the surface of the intermediate layer-protruding portion facing the negative electrode while covering the end edge of the positive active material layer.

10. An energy storage module comprising:
the energy storage device according to any one of claims 1 to 9; and
a bus bar member electrically connected to the energy storage device.

11. A method for producing an energy storage device including an electrode assembly having a pair of electrodes overlapped with each other, the method comprising:
an intermediate layer-forming step of applying a composition for an intermediate layer containing a carbonaceous material and a nonaqueous binder to a current collecting substrate of at least one of the electrodes;
an active material layer-forming step of applying a composite containing an active material and a nonaqueous binder on the intermediate layer; and
an insulating layer-forming step of applying a composition for an insulating layer containing an insulating material and an aqueous binder on the intermediate layer or the active material layer, such that the insulating layer is in contact with at least the intermediate layer.

12. The method for producing an energy storage device according to claim 11, wherein the active material layer-forming step and the insulating layer-forming step are simultaneously performed.

13. The method for producing an energy storage device according to claim 11 or 12, wherein the composite contains a carbonaceous material.

14. The method for producing an energy storage device according to any one of claims 11 to 13, wherein the insulating material contains inorganic particles.

15. The method for producing an energy storage device according to any one of claims 11 to 14, wherein, in the insulating layer-forming step, the composition for an insulating layer is applied on a portion of the intermediate layer on which the composite is not applied.

## Patentansprüche

1. Energiespeichervorrichtung, die eine Elektrodenbaugruppe umfasst, die ein Paar Elektroden aufweist, die einander überlappen,
wobei:
mindestens eine der Elektroden umfasst: ein Stromsammelsubstrat, eine Aktivmaterialschicht, die auf dem Stromsammelsubstrat angeordnet ist, eine Zwischenschicht, die zwischen dem Stromsammelsubstrat und der Aktivmaterialschicht angeordnet ist, und eine Isolierschicht, die auf dem Stromsammelsubstrat angeordnet ist und in Kontakt mit mindestens der Zwischenschicht steht,
die Aktivmaterialschicht ein aktives Material und ein erstes Bindemittel enthält,
die Zwischenschicht ein kohlenstoffhaltiges Material und ein zweites Bindemittel enthält,
die Isolierschicht ein isolierendes Material enthält und ein drittes Bindemittel enthält,
das zweite Bindemittel ein wasserfreies Bindemittel ist und
das dritte Bindemittel ein wasserhaltiges Bindemittel ist.

2. Energiespeichervorrichtung nach Anspruch 1, wobei das erste Bindemittel ein wasserfreies Bindemittel ist.

3. Energiespeichervorrichtung nach Anspruch 2, wobei die Aktivmaterialschicht ein kohlenstoffhaltiges Material enthält.

4. Energiespeichervorrichtung nach einem der Ansprüche 1 bis 3, wobei das isolierende Material anorganische Partikel enthält.

5. Energiespeichervorrichtung nach einem der Ansprüche 1 bis 4, wobei jede des Elektrodenpaares mindestens die Aktivmaterialschicht umfasst und die Aktivmaterialschichten jeweils so angeordnet sind, dass sie einander zugewandt sind, und
die Isolierschicht einer Elektrode so angeordnet ist, dass sie mindestens einem Teil des Endrandes der Aktivmaterialschicht in der anderen Elektrode zugewandt ist.

6. Energiespeichervorrichtung nach einem der Ansprüche 1 bis 5, wobei, in einer Elektrode, die Isolierschicht so angeordnet ist, dass sie die Vorderfläche der Aktivmaterialschicht bedeckt, wobei die Vorderfläche der Aktivmaterialschicht der anderen Elektrode zugewandt ist.

7. Energiespeichervorrichtung nach einem der Ansprüche 1 bis 6, wobei, in einer Elektrode, die Isolierschicht so angeordnet ist, dass sie die Vorderfläche des Stromsammelsubstrats bedeckt, wobei die Vorderfläche des Stromsammelsubstrats der anderen Elektrode zugewandt ist.

8. Energiespeichervorrichtung nach einem der Ansprüche 1 bis 7, wobei die Zwischenschicht einen Zwischenschicht-Vorsprungsabschnitt aufweist, der vom dem Endrand der Aktivmaterialschicht nach außen vorsteht, und
die Isolierschicht so angeordnet ist, dass sie den Zwischenschicht-Vorsprungsabschnitt bedeckt, während sie in Kontakt mit dem Stromsammelsubstrat steht.

9. Energiespeichervorrichtung nach einem der Ansprüche 1 bis 7, wobei:
das Elektrodenpaar einer positiven Elektrode bzw. einer negativen Elektrode entspricht;
die positive Elektrode eine positive Aktivmaterialschicht als die Aktivmaterialschicht, die Zwischenschicht und die Isolierschicht aufweist;
die negative Elektrode eine negative Aktivmaterialschicht als die Aktivmaterialschicht aufweist;
die negative Aktivmaterialschicht einen Endrand aufweist, der von dem Endrand der positiven Aktivmaterialschicht nach außen angeordnet ist, die der negativen Aktivmaterialschicht zugewandt ist;
die Zwischenschicht einen Zwischenschicht-Vorsprungsabschnitt aufweist, der vom Endrand des positiven Aktivmaterialschicht nach außen vorsteht, und
die Isolierschicht so angeordnet ist, dass sie dem Endrand der negativen Aktivmaterialschicht zugewandt ist, und so angeordnet ist, dass sie eine Fläche des Zwischenschicht-Vorsprungsabschnitts bedeckt, wobei die Fläche des Zwischenschicht-Vorsprungsabschnitt der negativen Elektrode zugewandt ist, während sie den Endrand der positiven Aktivmaterialschicht bedeckt.

10. Energiespeichermodul, das Folgendes umfasst:
Energiespeichervorrichtung nach einem der Ansprüche 1 bis 9; und
ein Sammelschienenelement, das elektrisch mit der Energiespeichervorrichtung verbunden ist.

11. Verfahren zum Herstellen einer Energiespeichervorrichtung, die eine Elektrodenbaugruppe enthält, die ein Paar Elektroden aufweist, die einander überlappen, wobei das Verfahren Folgendes umfasst:
einen Zwischenschicht-Bildungsschritt zum Aufbringen einer Zusammensetzung für eine Zwischenschicht, die ein kohlenstoffhaltiges Material und ein wasserfreies Bindemittel enthält, auf ein Stromsammelsubstrat von mindestens einer der Elektroden,
eine Aktivmaterialschicht-Bildungsschritt zum Aufbringen eines Verbundmaterials, das ein aktives Material und ein wasserfreies Bindemittel enthält, auf die Zwischenschicht; und
einen Isolierschicht-Bildungsschritt zum Aufbringen einer Zusammensetzung für eine Isolierschicht, die ein isolierendes Material und ein wasserhaltiges Bindemittel enthält, auf die Zwischenschicht oder die Aktivmaterialschicht, dergestalt, dass die Isolierschicht in Kontakt mit mindestens der Zwischenschicht steht.

12. Verfahren zum Herstellen einer Energiespeichervorrichtung nach Anspruch 11, wobei der Aktivmaterialschicht-Bildungsschritt und der Isolierschicht-Bildungsschritt gleichzeitig ausgeführt werden.

13. Verfahren zum Herstellen einer Energiespeichervorrichtung nach Anspruch 11 oder 12, wobei das Verbundmaterial ein kohlenstoffhaltiges Material enthält.

14. Verfahren zum Herstellen einer Energiespeichervorrichtung nach einem der Ansprüche 11 bis 13, wobei das isolierende Material anorganische Partikel enthält.

15. Verfahren zum Herstellen einer Energiespeichervorrichtung nach einem der Ansprüche 11 bis 14, wobei in dem Isolierschicht-Bildungsschritt die Zusammensetzung für eine Isolierschicht auf einen Abschnitt der Zwischenschicht aufgebracht wird, auf dem das Verbundmaterial nicht aufgebracht ist.

## Revendications

1. Dispositif de stockage d'énergie comprenant un ensemble électrodes comportant une paire d'électrodes se chevauchant l'une l'autre,
au moins l'une des électrodes comportant un substrat collecteur de courant, une couche de matière active disposée sur le substrat collecteur de courant, une couche intermédiaire disposée entre le substrat collecteur de courant et la couche de matière active, et une couche isolante disposée sur le substrat collecteur de courant et au contact d'au moins la couche intermédiaire,
la couche de matière active contenant une matière active et un premier liant,
la couche intermédiaire contenant une matière carbonée et un deuxième liant,
la couche isolante contenant une matière isolante et un troisième liant,
le deuxième liant étant un liant non aqueux, et
le troisième liant étant un liant aqueux.

2. Dispositif de stockage d'énergie selon la revendication 1, dans lequel le premier liant est un liant non aqueux.

3. Dispositif de stockage d'énergie selon la revendication 2, dans lequel la couche de matière active contient une matière carbonée.

4. Dispositif de stockage d'énergie selon l'une quelconque des revendications 1 à 3, dans lequel la matière isolante comprend des particules inorganiques.

5. Dispositif de stockage d'énergie selon l'une quelconque des revendications 1 à 4, dans lequel chaque électrode de la paire d'électrodes comporte au moins la couche de matière active et les couches de matière active sont disposées chacune pour être en regard l'une de l'autre, et
la couche isolante d'une électrode est disposée pour être en regard d'au moins une partie du bord d'extrémité de la couche de matière active de l'autre électrode.

6. Dispositif de stockage d'énergie selon l'une quelconque des revendications 1 à 5, dans lequel, dans une électrode, la couche isolante est disposée pour recouvrir la face de la couche de matière active, la face de la couche de matière active étant en regard de l'autre électrode.

7. Dispositif de stockage d'énergie selon l'une quelconque des revendications 1 à 6, dans lequel, dans une électrode, la couche isolante est disposée pour recouvrir la face du substrat collecteur de courant, la face du substrat collecteur de courant étant en regard de l'autre électrode.

8. Dispositif de stockage d'énergie selon l'une quelconque des revendications 1 à 7, dans lequel la couche intermédiaire comporte une partie saillante de couche intermédiaire faisant saillie à l'extérieur par rapport au bord d'extrémité de la couche de matière active, et
la couche isolante est disposée pour recouvrir la partie saillante de couche intermédiaire, tout en étant au contact du substrat collecteur de courant.

9. Dispositif de stockage d'énergie selon l'une quelconque des revendications 1 à 7, dans lequel la paire d'électrodes correspond à une électrode positive et à une électrode négative, respectivement ;
l'électrode positive comporte une couche de matière active positive en tant que couche de matière active, la couche intermédiaire et la couche isolante ;
l'électrode négative comporte une couche de matière active négative en tant que couche de matière active ;
la couche de matière active négative présente un bord d'extrémité disposé à l'extérieur par rapport au bord d'extrémité de la couche de matière active positive en regard de la couche de matière active négative ;
la couche intermédiaire comporte une partie saillante de couche intermédiaire faisant saillie à l'extérieur par rapport au bord d'extrémité de la couche de matière active positive ; et
la couche isolante est disposée pour être en regard du bord d'extrémité de la couche de matière active négative et est disposée pour recouvrir une surface de la partie saillante de couche intermédiaire, la surface de la partie saillante de couche intermédiaire étant en regard de l'électrode négative tout en recouvrant le bord d'extrémité de la couche de matière active positive.

10. Module de stockage d'énergie comprenant :
le dispositif de stockage d'énergie selon l'une quelconque des revendications 1 à 9 ; et
un élément de barre omnibus électriquement relié au dispositif de stockage d'énergie.

11. Procédé de production d'un dispositif de stockage d'énergie incluant un ensemble électrodes comportant une paire d'électrodes se chevauchant l'une l'autre, le procédé comprenant :
une étape de formation de couche intermédiaire, consistant à appliquer une composition destinée à une couche intermédiaire contenant une matière carbonée et un liant non aqueux, sur un substrat collecteur de courant d'au moins l'une des électrodes ;
une étape de formation de couche de matière active, consistant à appliquer un composite contenant une matière active et un liant non aqueux sur la couche intermédiaire ; et
une étape de formation de couche isolante consistant à appliquer une composition destinée à une couche isolante contenant une matière isolante et un liant aqueux, sur la couche intermédiaire ou la couche de matière active, de manière que la couche isolante soit au contact d'au moins la couche intermédiaire.

12. Procédé de production d'un dispositif de stockage d'énergie selon la revendication 11, dans lequel l'étape de formation de couche de matière active et l'étape de formation de couche isolante sont exécutées simultanément.

13. Procédé de production d'un dispositif de stockage d'énergie selon la revendication 11 ou 12, dans lequel le composite contient une matière carbonée.

14. Procédé de production d'un dispositif de stockage d'énergie selon l'une quelconque des revendications 11 à 13, dans lequel la matière isolante contient des particules inorganiques.

15. Procédé de production d'un dispositif de stockage d'énergie selon l'une quelconque des revendications 11 à 14, dans lequel, à l'étape de formation de couche isolante, la composition destinée à une couche isolante est appliquée sur une partie de la couche intermédiaire sur laquelle le composite n'est pas appliqué.
